Europäisches Patentamt

European Patent Office

Office européen des brevets

(19)

(11) Publication number: **0 439 991 A1**

# EUROPEAN PATENT APPLICATION

(12)

(21) Application number: **90610076.3**

(22) Date of filing: **20.12.90**

(51) Int. Cl.⁵: **A01D 57/20**

(30) Priority: **16.01.90 DK 126/90**

(43) Date of publication of application:
**07.08.91 Bulletin 91/32**

(84) Designated Contracting States:
**DE FR GB NL**

(71) Applicant: **JF-FABRIKEN - J. FREUDENDAHL A/S**
**Linde Alle**
**DK-6400 Sonderborg(DK)**

(72) Inventor: **Nielsen, Harald Raun**
**No. 5, Kyshoj**
**DK-6400 Sonderborg(DK)**
Inventor: **Rasmussen, Laurits**
**No. 26, Sundvaenget**
**DK-6400 Sonderborg(DK)**

(74) Representative: **Raffnsoee, Knud Rosenstand (DK) et al**
**Internationalt Patent-Bureau, 23 Hoje Taastrup Boulevard**
**DK-2630 Taastrup(DK)**

(54) **A side discharger for a windrower.**

(57) In a harvester for grass crops and of the type comprising a supporting structure (1,2) in connection with ground wheels (3), cutter means (4) for cutting the crop and a conveyor and conditioner unit (5) for the cut crop, a double windrow is obtained by means of a side discharger having a roller conveyor (14) arranged behind the conveyor and conditioner unit (5) for lateral conveyance of the crop to a discharge opening (21) positioned rearwardly of the ground wheels (3) at one side of the mower. The roller conveyor (14) has a number of rollers (15-20) rotating in the same direction of rotation and which are disposed side by side with mutually parallel axes of rotation and with their one end facing the conditioner unit (5) while the rollers (15-20) at their opposite ends are journalled in a common retainer member (12).

The side discharger may be movable between an operating position active for side discharge and an inactive position in which the roller conveyor (14) is positioned outside a crop conveying path between the conditioner unit (5) and a discharge opening rearwardly directed from the harvester. The roller (20) of the conveyor (14) positioned closest to the lateral discharge opening (21) may have a larger diameter and may for instance rotate at a higher velocity than the remaining rollers (15-19), thereby further allowing use of the side discharger for crop scattering.

EP 0 439 991 A1

FIG.I

## A SIDE DISCHARGER FOR A HARVESTER FOR GRASS CROPS.

The invention relates to a harvester for grass crops and of the type comprising a supporting structure in connection with ground wheels, cutter means for cutting the crop and a conveyor and conditioner unit for the cut crop, said side discharger including a conveyor arranged behind said conveyor and conditioner unit for lateral conveyance of the crop discharged from the conditioner unit to a discharge opening positioned rearwardly of the ground wheels at one side of the harvester.

In order to enhance the work capacity when picking up grass crops it is known to design the harvester used for windrowing and/or the windrow collector used for picking up the cut crop in such a manner that two adjacent windrows are picked up for every pass of the field.

From DK-A-2883/87 its is thus known to design a harvester with a rearwardly directed discharge opening asymmetrically disposed at one side of the centre line in the direction of travel. When passing through the field in alternately opposite directions the windrows will be discharged in pairs at a smaller distance between the two windrows of a pair than between two neighbouring pairs, following which the two windrows of each pair may be picked up in only one pass, e.g. by using a crop collector with an increased operating width as known from DK-A-5590/86.

In practice, this prior solution, however, involves the problem that it might be difficult to avoid driving partly over already cut crop in the following field passes.

This problem is eliminated by designing the harvester with side discharge of the crop, thereby combining the crop processed in two consecutive passes of the field into a single windrow.

Examples of such harvesters are known from DE-A-3604691 and US-A-4 570 751 and 4 757 672.

In the harvester known from DE-A-3 604 691 the side discharge is obtained by means of a conveyor belt arranged rearwardly of and above the conditioner and conveyor unit formed as a crimper roller, the cut and conditioned crop being fed to said conveyor belt in every second pass, whereas during the other passes a pivotal shield is given such a position that the crop is fed under the conveyor belt to a conventional backwards facing discharge opening.

The comparatively elevated conveyor belt, in this case chosen to have the conveyor arranged close to the conditioner unit without coming into conflict with the ground wheels positioned at the rear of the conditioner unit of the harvester, results in an undesired great height of the harvester and makes the structure more expensive and causes, moreover, an inevitably non-insignificant waste of crop.

In the design known from US-A-4 590 751 the side conveyor forms part of a separate unit coupled on the conventional rearwards facing discharge opening of the mower. This prior art thus operates with side discharge for every pass and the desired pairwise combining of the windrows necessitates, provided each pass of the field takes place in the same direction, that the direction of conveyance of the side conveyor is reversed on alternate passes, and that the position of the discharge opening of the side conveyor is adjusted within the swath width.

According to the above prior solutions the use of an endless conveyor belt as the side conveyor further entails that the windrows provided by the side discharge are in practice discharged on the ground immediately outside the lateral discharge opening and that even with adjustable velocity of the conveyor belt it is difficult to effect a completely exact adjustment of the swath width. In the design known from said DE-publication the elevated conveyor belt per se implies that the windrows provided by the side discharge can only with difficultly be deposited with the desired accuracy. Due to wear an endless conveyor belt must further be changed comparatively frequently.

Finally, the side discharge according to the design known from US-A-4 757 672 is effected by means of an upright conical drum rotating about a vertical axis with rearwardly projecting fingers substantially tangential relative to the direction of rotation and suspended in a beam connected with the supporting structure of the harvester. This design is intended merely to be arranged at the back of the generally rearwardly directed discharge opening of a harvester and to effect side discharge during every field pass. The side discharge is relatively inexact and waste of crop cannot be avoided.

On the basis of structures of the type disclosed in DE-A-3 604 691 and US-A-4 590 751, the side discharger according to the invention is characterized in that said conveyor is formed as a roller conveyor with a number of rollers rotating in the same direction of rotation and disposed side by side with mutually parallel axes of rotation to provide a conveying path directed towards lateral discharge openings, thereby one end of each roller facing the conditioner unit while the rollers at their opposite ends are journalled in a common retainer member.

With this design of the conveyor as a roller conveyor with a number of individual rollers determined by the operating width of the harvester, a compact and hard-wearing structure relative to the known belt conveyors is obtained, by which a desired windrowing position may be set by controlling the velocity of the rollers in relation to the lateral discharge opening and a desired swath width.

The side discharger according to the invention may be used in conformity with the principle described in US-A-4 590 751 practising side discharge in every field pass, the conveying direction of the roller conveyor being optionally reversed for every other pass.

A preferred embodiment in which the side discharger is designed to be used in conjunction with a harvester of the type comprising guide means for defining a rearwards directed discharge opening positioned rearwardly of the ground wheels for discharging the conditioned crop in windrows with a smaller width than the effective cut width is, however, characterized in that the side discharger is movable between an operating position active for side discharge and an inactive position in which the conveyor is positioned outside a crop conveying path between the conditioner unit and said rearwards directed discharge opening.

With the view of diminishing the risk of waste of crop the side discharger of this design may be suspended so that the end of the conveyor remote from the lateral discharge opening is positioned in said active operating position between said guide means and closer to the conditioner unit than the end of the conveyor adjacent the lateral discharge opening.

In harvesters of the type in which the supporting structure includes a transverse beam disposed above and rearwardly of the conditioner unit with downwards projecting suspension members for the ground wheels, the side discharger according to the invention may be arranged at the rear of the ground wheels and at a comparatively short distance above the ground surface, thereby reducing waste of crop to a minimum in that the conveyor is suspended so that the axes of rotation of the rollers tilt forwards in the direction towards the conditoner unit.

To design the side discharger with a roller conveyor enables to ensure optimum pickup of the crop fed to the conveyor in that the rollers of the conveyor are provided with rib-shaped carrier means.

By designing the side discharger so that the rollers can only rotate in one direction of rotation to determine a conveying path directed towards a discharge opening only at one side of the harvester and that said carrier means at the free ends of the rollers have a deflection or bending directed forwards in relation to the direction of rotation, whereby said hydraulic motors may be individually controllable, a particularly advantageous possibility of individual adjustment of the working rate of the rollers is obtained, e.g. so that the roller adjacent the lateral discharge opening operates at a higher circumferential velocity, thereby obtaining a certain acceleration of the crop prior to discharging it.

An additional increase of the circumferential velocity of the last roller in conjunction with some elevation of the laterally conveyed crop may be obtained in that the roller positioned adjacent said lateral discharge opening has a larger diameter than the remaining rollers.

The possibility of controlling the discharge rate and of lifting the crop entails the particular advantage that the side discharger according to the invention besides the primary use for double windrowing may also be used for scattering the harvested crop material at the rear of the towing tractor to provide more rapid drying without the risk of driving over the scattered material. As regards hay production rake running may then be saved. The scattering may be effected solely by means of the last roller on the roller conveyor, but a separate scatter assembly may optionally be mounted.

The invention will now be explained in detail with reference to the schematical drawings, in which

Figs 1 and 2 are a side elevation and a plane view, respectively, of a harvester and an embodiment of a side discharger according to the invention,

Fig. 3 is a section through the roller conveyor of the side discharger along the lines III-III of Fig. 2, and

Fig. 4 illustrates windrowing by use of a harvester with a side discharger according to the invention of the embodiment shown in Figs 1 to 3.

The illustrated harvester is of the general type the supporting structure of which includes a transverse beam 1 in connection with suspended suspension means 2 for the ground wheels 3 positioned rearwardly of the transverse beam 1.

Cutter means 4 shaped as slightly inclined mowing discs are further suspended in the supporting structure in a manner not shown together with the conditioner and conveyor unit which in the illustrated embodiment is shaped as a crimper roller 5 with projecting fingers 6 and positioned immediately above and rearwardly of said cutter means.

The entire crop processing section of the machine is covered by a shielding plate 7 illustrated in Fig. 7 and two guide plates 8 and 9 converging rearwardly from the crimper roller 5 are further connected with the supporting structure, said guide plates defining with their rear edges during a normal field pass without side discharge a rearwardly directed crop discharge opening with a swath width reduced in relation to the cut width.

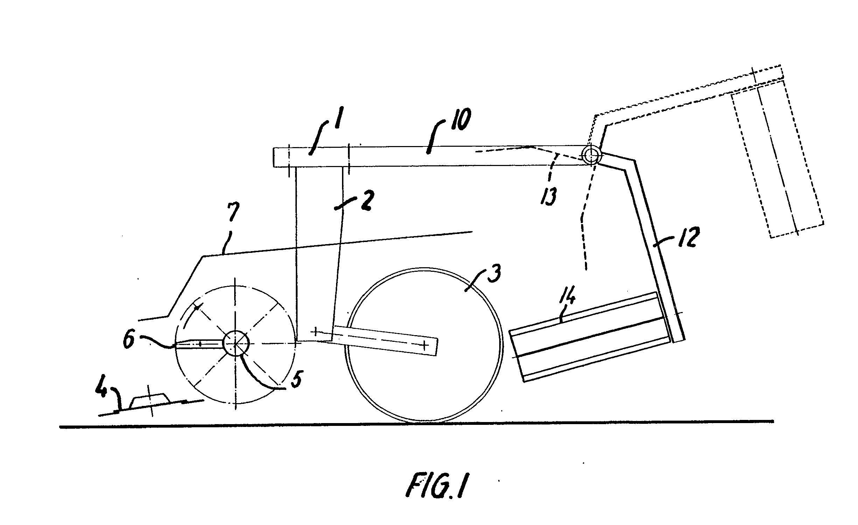

In the illustrated embodiment the side discharger is connected with the transverse beam 1 by means of two catch arms 10 and 11 rearwardly extending therefrom and with whose free ends the side discharger is pivotally connected as shown in Fig. 1, so that it may be moved between the active operating position for side discharge, shown in solid lines, and the inactive position shown in dotted lines, in which the side discharger in the illustrated embodiment is lifted to a position above the crop conveying path between the crimper roller 5 and the rearwardly directed discharge opening between the guide plates 8 and 9.

The side discharger includes a retainer member 12 formed as a shielding plate and connected with the arms 10 and 11 and which in the active position occupies a position almost vertically suspending from the fulcrums at the ends of catch arms 10 and 11. A shielding plate 13 shown in dashed lines in Fig. 1 is further connected with the retainer member 12 and is pivotal together with the side discharger between a position in which in the active position of the side discharger it is directed substantially forwards and a position in which in the elevated, inactive position of the side discharger it is hanging substantially vertically from the fulcrums at the ends of the arms 10 and 11 in order to define the rearwardly directed discharge opening upwards.

In the illustrated embodiment a roller conveyor 14 comprising six rollers 15 to 20 which may be designed as sheet steel drums is suspended in the retainer member 12 at the edge lowermost positioned in the active position opposite the fulcrums.

The suspension is effected so that the rollers 15 to 20 in the active position incline forwards in the direction towards the ground wheels 3 and the crimper roller 5 and with their ends facing the crimper roller 5 at a comparatively small distance above the ground surface, thereby reducing possible waste of crop to a minimum. The rollers 15 to 20 may at the ends facing the crimper roller 5 be journalled in a common front plate, not shown, with a corrugated upper edge conforming to the contour of the complete roller conveyor.

In the illustrated embodiment the suspension is further by means of the inclined catch arms 10 and 11 effected so that one end of the roller conveyor 14 at the roller 15 is positioned substantially within the guide plate 9 and closer to the crimper roller 5 than is the other end which is positioned at the roller 20, where the lateral discharge opening 21 of the side discharger is located. This feature too has for its purpose to ensure an optimum crop pickup on the roller conveyor in its active position, thereby preventing waste of crop.

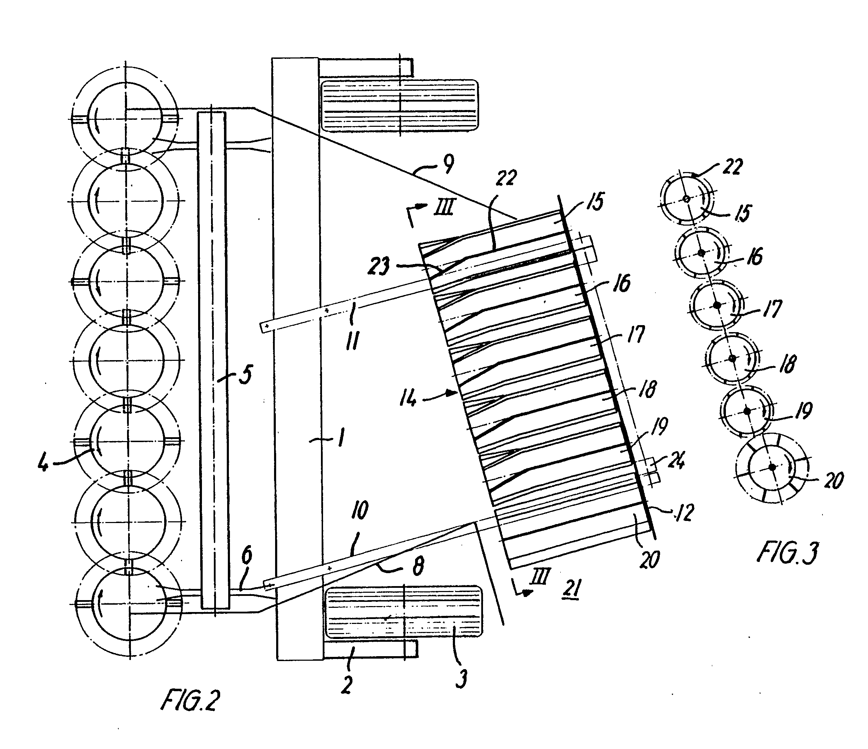

As a supplementary measure having the same purpose the individual rollers 15 to 20 may, as shown in Figs 2 and 3, be provided with rib-shaped carriers 22 which in the illustrated embodiment including only one lateral discharge opening at one side of the harvester so that only one and the same direction of conveyance is used for the roller conveyor each has a deflection 23 facing forwardly in the direction of rotation of the rollers preferably at the ends of the rollers 15 to 20 facing the crimper roller 5.

As illustrated in Fig. 2 the rollers 15 to 20 may be driven by individual hydraulic motors 24, said motors being driven from a hydraulic pump connected to the power take-off (PTO) of a tractor and being for instance the same pump as the one driving hydraulic motors for mowing discs and crimper roller or the hydraulic pump proper of the tractor.

The motors 24 are preferably individually adjustable, at any rate so that the roller 20 adjacent the discharge opening 21 may be caused to rotate at a higher rate of speed.

The rollers 15 to 20 may, however, also be driven by a common motor through suitable transmission means.

As illustrated in Fig. 3, the roller 20 adjacent the discharge opening 21 may have a larger diameter than the remaining rollers 15 to 19. By this and for instance also by causing the roller 20 to rotate at a higher rate, a higher circumferential velocity of the roller 20 is obtained and thus a certain acceleration together with an elevation of the crop immediately in connection with the side discharge through the lateral opening 21. This offers an advantageous possibility of adjusting the positioning of the windrow and the swath width in connection with the side discharge and further entails the particular advantage that the side discharger besides forming a double windrow may also be used for scattering the crop, e.g. in connection with hay production.

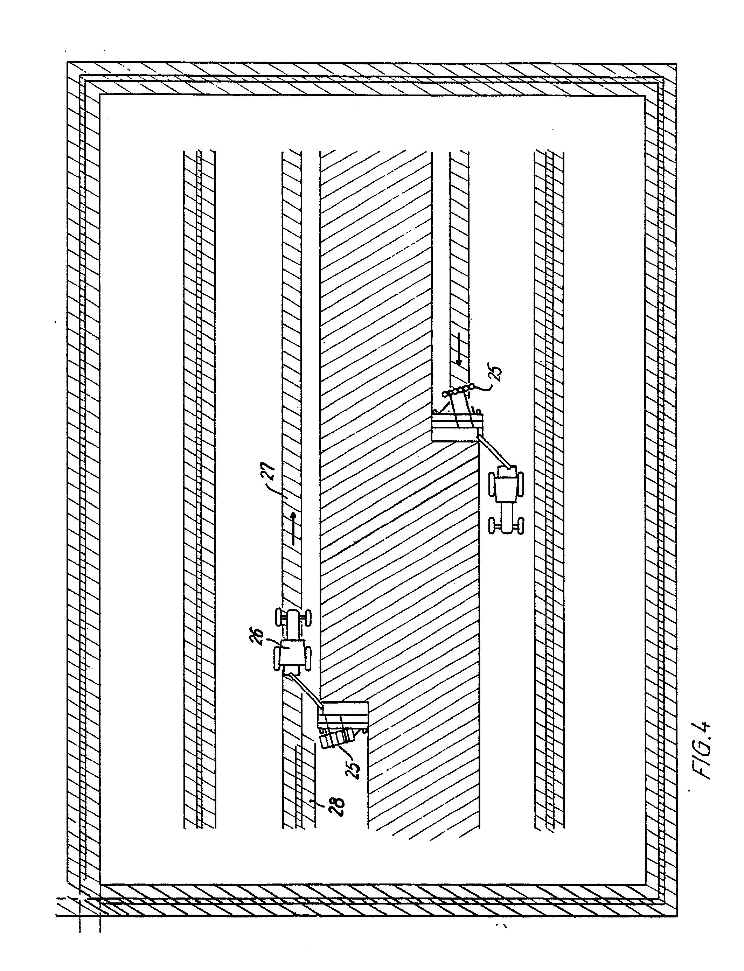

A harvester with a side discharger of the illustrated embodiment according to the invention is used as shown in Fig. 4 in such a manner that the side discharger 25 in the first field pass is lifted to the inactive position, as shown at the bottom of the figure.

In a following field pass, shown at the top of the figure, and which is carried out in the same driving direction, the side discharger 25 is in the active position and the tractor passes across the previously discharged windrow 27 with its ground wheels on either side thereof. The windrow 28 will now by means of side discharger 25 be placed partially overlapping the previously discharged windrow 27, following which both windrows 27 and 28 may be picked up in one cycle of operation by means of a conventional swath lifter.

As it appears from the preceding, the invention is not restricted to the illustrated and described embodiment. The design of the side discharger with a roller conveyor may be used with the same advantage in a design in which side discharge is effected during every field pass and in that case the side discharger does not necessarily need to be movable between an active and an inactive position. The rollers of the roller conveyor may be driven at the same rotational speed without the need for individual setting and in other designs of the harvester than that shown in the drawings, the roller conveyor may for instance be disposed closer to the crimper roller and in a position elevated relative to the ground surface.

## Claims

1. A side discharger for a harvester for grass crops and of the type comprising a supporting structure (1,2) in connection with ground wheels (3), cutter means (4) for cutting the crop and a conveyor and conditioner unit (5) for the cut crop, said side discharger including a conveyor (14) arranged behind said conveyor and conditioner unit for lateral conveyance of the crop discharged from the conditioner unit (5) to a discharge opening (21) positioned rearwardly of the ground wheels (3) at one side of the harvester, characterized in that said conveyor (14) is formed as a roller conveyor with a number of rollers (15 to 20) rotating in the same direction of rotation and disposed side by side with mutually parallel axes of rotation to provide a conveying path directed towards said lateral discharge opening (21), one end of each roller (15 to 21) facing the conditioner unit (59) while the rollers (15 to 20) at their opposite ends are journalled in a common retainer member (12).

2. A side discharger as claimed in claim 1 for a harvester of the type comprising guide means (8 to 9) for defining a rearwards directed discharge opening positioned rearwardly of the ground wheels (3) for discharging the conditioned crop in windrows with a smaller width than the effective cut width of the harvester, characterized in that the side discharger is movable between an operating position active for side discharge and an inactive position in which the conveyor (14) is positioned outside a crop conveying path between the conditioner unit (5) and said rearwards directed discharge opening.

3. A side discharger as claimed in claim 2, characterized in that it is suspended so that in said active operating position the end of the conveyor (14) facing away from the lateral discharge opening (21) is positioned between said guide means (8 to 9) and closer to the conditioner unit (5) than the end of the conveyor (14) adjacent the lateral discharge opening (21).

4. A side discharger as claimed in any of the preceding claims for a harvester of the type in which the supporting structure includes a transverse beam (1) disposed above and rearwardly of the conditioner unit (5) and having downwards projecting suspension members (2) for the ground wheels (3) characterized in that the conveyor (14) is suspended so that the axes of rotation of the rollers (15 to 20) tilt forwards in the direction towards the conditoner unit (5).

5. A side discharger as claimed in any of the preceding claims, characterized in that the rollers (15 to 20) of the conveyor (14) are provided with rib-shaped carrier means (22).

6. A side discharger as claimed in claim 5, characterized in that the rollers (15 to 20) can only rotate in one direction of rotation for determining a conveying path directed towards a discharge opening (21) at only one side of the mower and that said carrier means (22) at the free ends of the rollers have a deflection or bending (23) directed forwards in relation to the direction of rotation.

7. A side discharger as claimed in any of the preceding claims, characterized in that the rollers (15 to 20) of the conveyor (14) have individual driving means in the form of hydraulic motors (24) connected with a tractor driven hydraulic pump.

8. A side discharger as claimed in claim 7, characterized in that said hydraulic motors (24) are individually settable.

9. A side discharger as claimed in any of the preceding claims, characterized in that the roller (20) positioned adjacent said lateral discharge opening (21) operates at a higher circumferential velocity than the remaining rollers.

10. A side discharger as claimed in claim 9, characterized in that the roller (20) positioned adjacent said lateral discharge opening (21) has a larger diameter than the remaining rollers.

11. A side discharger as claimed in claims 2 and 4, characterized in that the retainer member

**EP 0 439 991 A1**

(12) is pivotally suspended in catch arms (10,11) extending rearwardly from the transverse beam (1) with fulcrums positioned above and rearwards with respect to the ground wheels (3) and is further connected, in the proximity of the fulcrums, with a shielding plate (13) which in the inactive position projects down into the conveying path from the conditioner unit (5) to the rearwardly directed discharge opening to define this opening from above.

FIG.1

EP 0 439 991 A1

FIG.2

FIG.3

EP 0 439 991 A1

FIG.4

# EUROPEAN SEARCH REPORT

## EP 90 61 0076

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | GB-A-2 088 684 (HESSTON CORPORATION) <br> * page 2, line 62 - page 3, line 17 * * page 3, line 86 - line 116; figures 1,2,5,6 * <br> – – – | 1,2,5,4 | A 01 <br> D 57/20 |
| Y,A | GB-A-2 094 606 (SPERRY) <br> * page 2, line 102 - page 3, line 41 * * page 4, line 34 - line 54 @ page 4, line 103 - line 107; figures 2-4 * <br> – – – | 1,2,5,6,10 | |
| D,A | US-A-4 757 672 (ROGER) <br> * column 3, line 36 - column 4, line 32; figures 1,2 * <br> – – – | 1-4 | |
| A | FR-A-2 483 736 (RAGOT) <br> * page 1, line 38 - page 3, line 22; figures 1-3 * <br> – – – | 1-3 | |
| D,A | US-A-4 590 751 (STEPHENSON) <br> * column 3, line 36 - column 4, line 32; figures 1,2 * <br> – – – | 1-4 | |
| A | US-A-2 071 844 (KORSMO ET AL.) <br> * page 2, left column, line 6 - line 20; figures 1-3 * <br> – – – – – | 9 | |

| | |
|---|---|
| | TECHNICAL FIELDS SEARCHED (Int. Cl.5) |
| | A 01 D |

The present search report has been drawn up for all claims

| Place of search | Date of completion of search | Examiner |
|---|---|---|
| The Hague | 15 April 91 | WILLIAMS M.J. |

CATEGORY OF CITED DOCUMENTS
X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons
........................................................................
& : member of the same patent family, corresponding
    document